# EUROPÄISCHE PATENTSCHRIFT

(11) **EP 1 196 710 B1**
(45) Veröffentlichungstag und Bekanntmachung des Hinweises auf die Patenterteilung: **29.09.2004**
(21) Anmeldenummer: 01945100.4
(22) Anmeldetag: 09.05.2001
(51) Int. Cl.: F16L 19/02, F16J 15/06

(54) **ABDICHTUNG FÜR MEDIENFÜHRENDE TEILE**
SEALING SYSTEM FOR MEDIA-CARRYING PARTS
DISPOSITIF D'ETANCHEITE POUR PIECES CONDUISANT DES SUBSTANCES

(30) Priorität: 16.05.2000 DE 10023692
(43) Veröffentlichungstag der Anmeldung: 17.04.2002
(73) Patentinhaber: Neumo GmbH + CO. KG, 75438 Knittlingen (DE)
(72) Erfinder: JOST, Harry, 75438 Knittlingen (DE)
(74) Vertreter: Patentanwälte Ruff, Wilhelm, Beier, Dauster & Partner
(86) Internationale Anmeldenummer: PCT/EP2001/005236
(87) Internationale Veröffentlichungsnummer: WO 2001/088424

(56) Entgegenhaltungen:
- EP-A- 0 921 341
- EP-A- 1 026 432
- DE-A- 3 143 369
- DE-A- 4 201 535
- DIN-NORM 11864-1,

## Beschreibung

Die Erfindung betrifft eine Abdichtung für medienführende Teile nach dem Oberbegriff des Anspruches 1.

In vielen Industriebereichen, beispielsweise in der Pharmazie, Nahrungsmittel oder Kosmetikindustrie müssen Verbindungen für medienführende Teile strengsten Anforderungen genügen, um beispielsweise in keimfreien oder sterilen Prozessen eingesetzt werden zu können. Keimfreiheit und Sterilität wird beispielsweise bei Prozessen zur Steigerung der Haltbarkeit von Milchprodukten oder bei der Herstellung von Nahrungsmitteln ohne den Einsatz von Konservierungsstoffen verlangt. Die Mindestanforderungen an solche Verbindungen sind in verschiedenen Qualitätssicherungsrichtlinien, wie beispielsweise der GMP (Good Manufacturing Practice), festgelegt. Dabei werden Anforderungen an die Konstruktion, die Verarbeitung, den Werkstoff und die Oberfläche der Verbindungen gestellt. Es hat sich gezeigt, daß häufig die Dichtung, das "schwächste Glied" solcher Verbindungen ist, daß also die Abdichtung solcher Verbindungen gegenüber der Umgebung eine entscheidende Rolle spielt, um Keimarmheit oder Sterilität der betreffenden Prozesse aufrecht erhalten zu können. Dabei ist insbesondere die Art der Dichtung und deren Festlegung an der Verbindung wichtig.

In der DE 197 35 427 wird eine sterile Verbindung zwischen zwei Teilen, insbesondere zwischen zwei Rohren, beschrieben. Die Verbindung weist zwei Aufnahmeräume, nämlich einen radialen inneren Aufnahmeraum und einen daran anschließenden äußeren Aufnahmeraum, zur Aufnahme von Dichtungen auf. Die im inneren Aufnahmeraum angeordnete Dichtung wird beim Zusammensetzen der beiden Rohre verformt, so daß sie den Aufnahmeraum praktisch vollständig ausfüllt. Sie sorgt dafür, daß die Verbindung in bakteriologischer Hinsicht von innen nach außen dicht ist. Bei einem Druckabfall im Rohr kann es jedoch zu Undichtigkeiten kommen, wenn die Dichtung in den Dichtspalt gezogen wird und soweit nach innen verformt wird, dass sie nicht mehr an den Wänden des Aufnahmeraums anliegt. Die zweite, im äußeren Aufnahmeraum angeordnete Dichtung soll dem entgegenwirken, und sorgt dafür, dass die Dichtigkeit in bakteriologischer Hinsicht auch von außen nach innen gegeben ist.

Die EP 0 921 341 A2 beschreibt eine Dichtung nach DIN 11864-1. Dort wird ein Rundschnurdichtring in einem geteilten Dichtungskanal aufgenommen und im zusammengespannten Zustand im Querschnitt oval verformt, wobei die lange Achse des Ovals radial, also senkrecht zur Hauptachse der Verbindung, verläuft.

Die DE 31 43 369 A1 beschreibt eine Rohrverschraubung, bei der eine Hälfte des Dichtkanals so vertieft ist, dass ein Hinterschnitt entsteht, der den Dichtring in der entsprechenden Hälfte unverlierbar hält. Die andere Hälfte des Dichtkanals ist passgenau zur Dichtring-Querschnittsform gearbeitet. Die Spannkraft der Dichtung wird über eine Mutter eingestellt und ist nicht begrenzt.

### AUFGABE UND LÖSUNG

Die Erfindung stellt sich die Aufgabe, eine Abdichtung für medienführende Teile zu schaffen, die einfach und kostengünstig herstellbar ist, und eine weiter verbesserte Sicherheit gegen bakteriologische Verunreinigungen bietet.

Zur Lösung dieser Aufgabe schlägt die Erfindung eine Verbindung mit den im Anspruch 1 genannten Merkmalen vor. Weiterbildungen der Erfindung sind Gegenstand der Unteransprüche.

Unter Abdichtung im Sinne der Anmeldung wird insbesondere eine lösbare Abdichtung, wie eine Verschraubung, eine Flansch- oder eine Klemmverbindung, o.dgl. verstanden. Als medienführende Teile werden alle Bauteile verstanden, die mit irgendwelchen Medien, wie Gasen, Flüssigkeiten o.dgl. in Kontakt kommen können, beispielsweise Rohre, Behälter, Ventile o.dgl.. Eine Abdichtung für medienführende Teile ist demnach vorzugsweise eine Anschluss-Verbindung zwischen zwei Leitungen, beispielsweise Rohren, zwischen zwei Behälterbauteilen oder zwischen einer Leitung und einem Behälter, beispielsweise zwischen einem Zuführrohr und einem Reaktor. Es ist jedoch auch möglich, die Abdichtung bei Ventilen o.dgl. einzusetzen, beispielsweise als Ventilgehäuseabdichtung und/oder als Spindelabdichtung. Die Abdichtung medienführende Teile kann für die verschiedensten Prozesse eingesetzt werden, insbesondere wird sie jedoch bei Aseptikanwendungen eingesetzt. Unter Aseptikanwendungen werden keimarme oder sterile Prozesse verstanden, unter denen Pharmazeutika, Nahrungsmittel, Kosmetika o.dgl. hergestellt werden.

Die erfindungsgemäße Abdichtung sieht vor, daß der Dichtungskanal von der unverformten Querschnittsform des Dichtringes abweichende Ausdehnungsräume aufweist. Der Dichtungskanal umschließt den Dichtring weitgehend und setzt sich aus Dichtflächen beider medienführender Teile zusammen. Der Dichtungskanal kann je als eine Art Nut in jedem der Teile augebildet sein. Insbesondere ist an jedem der beiden medienführenden Teile eine solche Nut ausgebildet, die beim Zusammenfügen der beiden Teile den Dichtungskanal bildet. Der Dichtungskanal ist im wesentlichen an die unverformte, insbesondere kreisförmige oder ovale Querschnittsform des Dichtringes angepaßt, mit Ausnahme jedoch der Bereiche von Dichtfuge und der Ausdehnungsräume. Unter äußeren Einflüssen, insbesondere beim Verspannen der Teile, verformt sich der im Dichtungskanal liegende Dichtring zum einen in die zum Medienraum hin weisende Dichtfuge und zum anderen in die Ausdehnungsräume. Unter Verspannen der Teile wird insbesondere das Anlegen einer definierten Vorspannung beim Zusammenfügen der beiden Teile verstanden, bei der der Dichtring an die Dichtflächen gepreßt wird und somit sowohl zum Medienraum als auch zur Umgebung hin abdichtet. Die Vorspannung wird insbesondere dadurch erreicht, daß die beiden Teile auf metallischen Anschlag gebracht werden. Der spezifische Dichtdruck beim Verpressen der Teile liegt vorzugsweise im Bereich der elastischen Verformung des Materials der Teile. Er kann nahe der Streckgrenze (0,2% - Dehngrenze) des Materials der Teile liegen, beispielsweise 20 % bis 80 % des Wertes der Streckgrenze betragen. Der Wert des Dichtdrucks kann ca. 30 Newton pro mm² bis 140 Newton pro mm² betragen.

Bei herkömmlichen Abdichtungen ist als Ausdehnungsraum ausschließlich die Dichtfuge am Medienraum vorgesehen. Im ungünstigsten Fall kann sich also der Dichtring in den Medienraum hineinverformen und dort eine Art Wulst bilden, der von den medienführenden Wandungen hervorsteht. Zwischen medienführender Wandung und Wulst kann sich also ein Totraum bilden, indem sich insbesondere bei Einsatz von flüssigen Medien nach dem Entleeren, Flüssigkeitsrückstände, beispielsweise Pfützen, ansammeln können, die ein idealer Nährboden für Keime und Bakterien sind. Bei der erfindungsgemäßen Verbindung ist dies nicht der Fall. Wie erwähnt, verformt sich der Dichtring dabei sowohl in die Dichtfuge als auch in die Ausdehnungsräume.

Bei einer Weiterbildung der Erfindung setzen sich die Dichtflächen der Verbindung aus Haupt-Dichtflächen und Neben-Dichtflächen zusammen. Als Haupt-Dichtflächen werden die Kontaktflächen zwischen Dichtungsring und den medienführenden Teilen verstanden, an denen beim Verspannen der Teile ein erhöhter Dichtungs-Auspreßdruck herrscht und somit die Haupt-Dichtwirkung auftritt. Die Haupt-Dichtflächen grenzen vorzugsweise an die zum Medienraum hin weisende Dichtfuge bzw. an die Trennfuge zwischen den beiden medienführenden Teilen an und dichten die Abdichtung sowohl von innen nach außen, also vom Medienraum zur Umgebung hin, und von außen nach innen ab. Die gegenüber den Haupt-Dichtflächen breiteren Neben-Dichtflächen liegen vorzugsweise im Bereich des wenigstens einen Ausdehnungsraums (Haupt-Ausdehnungsraum) und dichten zusätzlich ab. Beim Verspannen der Teile tritt also vorzugsweise an den Haupt-Dichtflächen der maximale Anpreßdruck auf. Das führt zu einer Festlegung des Dichtrings mit den medienführenden Teilen an diesen Haupt-Dichtflächen. Dadurch kann sich der in die Dichtungsfuge hineinverformende Wulst des Dichtringes nach dem Verspannen weder in den Medienraum hineinschieben noch sich in der Dichtungsfuge zurückziehen (Fahrstuhleffekt). Somit wird verhindert, daß Bakteriennester, die sich in der Dichtfuge am Übergang zwischen Dichtring und Medienraumwandung anlagern, durch eine Vor- und Rückwärtsbewegung des Wultes, wie sie beispielsweise bei Druck- oder Temperaturschwankungen im Medienraum auftreten kann, in die Dichtfläche hineingezogen werden und somit nicht mehr abgereinigt werden könnten. Zudem wird eine Beschädigung des Dichtungsringmaterials, beispielsweise in Form von Mikrorissen, die durch die Vor- und Rückwärtsbewegung des Wuchtes auftreten könnte, verhindert.

Bei einer Weiterbildung der Erfindung sind der Dichtungskanal und seine Ausdehnungsräume in Abhängigkeit von den Abmessungen des Dichtringes so bemessen, daß die Oberfläche des sich in die Dichtfuge verformenden Teils des Dichtringes im wesentlichen mit den medienführenden Wandungen der Teile fluchtet. Es bildet sich also im wesentlichen ein plan ausgebildeter Übergang zwischen Wandung und Dichtfuge der Verbindung.

Bei einer Weiterbildung der Erfindung sind die Ausdehnungsräume derart angeordnet, daß sich der Dichtring im wesentlichen symmetrisch zu mindestens einer Mittelachse seines Querschnittes verformt. Dabei entspricht die Größe und die Form eines, vorzugsweise der Dichtfuge gegenüberliegenden, Ausdehnungsraumes im wesentlichen der Größe und der Form der Dichtfuge, so daß sich symmetrisch zu einer axialen Mittelachse des Querschnitts des Dichtrings zwei im wesentlichen gleich große Teile des Dichtringes wulstartig in die Dichtfuge bzw. den Ausdehnungsraum hineinverformen. Zudem können sich symmetrisch zu einer radialen Mittelachse ebenfalls zwei Wulste in die beiden Nuten der medienführenden Teile hineinverformen. Dies verhindert, daß bei der Verspannung der beiden Teile sich der Dichtring im Ringkanal verdreht, was bei einer unsymmetrischen Verformung des Dichtringes möglich wäre. Dies könnte zu einer unverhältnismäßig hohen Materialbeanspruchung des Dichtringes führen, bei der der Dichtring zerstört werden könnte.

Bei der Erfindung wird der zumindest eine Haupt-Ausdehnungsraum durch eine von der vorzugsweise halbkreisförmigen Querschnittsgrundform des Dichtungsringes abweichende Querschnittsform des den Dichtungsring aufnehmenden Dichtungskanal gebildet. Diese Querschnittsform ist ein gegenüber der Halbkreisform vertieftes Profil, beispielsweise in Form einer Tasche, der den Dichtungskanal bildenden Kanathälften. Beispielsweise kann das Querschnittsprofil aus einem Halbkreisbogen und daran tangential anschließenden schwächer gekrümmten Abschnitten gebildet werden. Das sich aus zwei Kanalhälften zusammensetzende Profil kann aber auch durch zwei mit ihren Mittelpunkten in Achsrichtung auseinander versetzten Kreisbögen (nahezu Halbkreise) bestehen. Vorzugsweise schließen unmittelbar an die Haupt-Ausdehnungsräume die Haupt-Dichtflächen an, die insbesondere im Bereich von in den Dichtungsquerschnitt eingreifenden Abschnitte der Teile ausgebildet sind. Der Dichtungsring verformt sich beim Verspannen hauptsächlich in die Haupt-Ausdehnungsräume am Grund der nutförmigen Dichtungskanalhälften, also senkrecht zur Dichtungsfuge. Somit verformt sich nur ein kleiner Teil des Dichtringes als Wulst in die Dichtfuge.

Besonders bevorzugt weist die Abdichtung zusätzlich zu den Haupt-Ausdehnungsräumen noch einen Neben-Ausdehnungsraum auf, der am Übergang zwischen Dichtungskanal und einer von den beiden Teilen gebildeten im wesentlichen axial, also bezogen auf den Dichtring bzw. den Dichtungskanal, etwa tangential verlaufenden Trennfuge vorgesehen ist. Der Neben-Ausdehnungsraum kann alle erdenklichen Querschnittsformen, beispielsweise einen runden, ovalen o. dgl. Querschnitt aufweisen. Insbesondere bildet er jedoch eine im Querschnitt wulstförmige Vertiefung, die an den Dichtungskanal anschließt. Der Neben-Ausdehnungsraum ist in radialer Richtung ausgeprägt und hat gerundete Kanten, die dafür sorgen, daß der Dichtungsring bei seiner Verformung nicht beschädigt wird. Dabei ist insbesondere der Übergang zwischen dem Neben-Ausdehnungsraum und dem Dichtungskanal mit einem S-förmigen Übergang, also nicht nur rein tangential zum Dichtungskanal, ausgebildet.

Die axial an den Neben-Ausdehnungsraum anschließende Trennfuge ist vorzugsweise so eng ausgebildet, daß die Verformung des Dichtringes vorher endet, also daß der Dichtring nicht in die Trennfuge hineinverformt wird. Die Dichtfuge ist dazu nicht weiter als ein Hundertstel bis ein Zwanzigstel, insbesondere ein Achzigstel bis ein Fünfzigstel der Querschnittsabmessung des Dichtringes. Durch diese dichtungsringfreie Trennfuge können die beiden Teile beim Zusammenführen und bei der Verspannung axial sehr genau geführt werden.

Bei herkömmlichen Abdichtungen ist die an die Dichtfläche des Dichtungskanals anschließende Begrenzungskante der Dichtfuge derart ausgebildet, daß die medienführende Wandung der Teile mit einem Radius in den Dichtungskanal übergeht. An diesem Radius schließt sich ein gerader Abschnitt der Begrenzungskante an, der wiederum in einen daran anschließenden zweiten Radius übergeht. Das Anbringen der Radien soll ein Beschädigen des Dichtringes beim Verspannen verhindern, das bei scharfen Kanten möglich wäre. Jedoch kommt es vor, daß die Form der Begrenzungskante beim-Bearbeiten nicht "rund-gerade-rund" wird, sondern aufgrund der Toleranz bei der Bearbeitung die beiden Radien als eine Art gotischer Spitzbogen ineinander übergehen. Dadurch entsteht wiederum eine scharfe Kante, die den Dichtungsring beschädigen kann.

Bei einer Weiterbildung der Erfindung wird dies dadurch verhindert, daß die die Dichtfuge begrenzenden Kanten mit einem gleichmäßigen, vorgegebenen und von der toleranzveränderlichen Dicke der Kanten unabhängige Radius versehen sind. Der Radius beträgt dabei ca. ein Zwanzigstel bis ein Drittel, vorzugsweise ein Zehntel bis ein Fünftel der Querschnittsabmessung des Dichtringes. Der Dichtring ist bevorzugt derart ausgebildet, daß seine Querschnittsabmessung im Vergleich zur Nennweite der medienführenden Teile, die beispielsweise zwischen 50 mm und 400 mm liegen kann, gering ist. Die Querschnittsabmessung liegt vorzugsweise im Bereich von einem Hundertfünfzigstel bis einem Zehntel, insbesondere von einem Hundertstel bis einem Fünfzigstel der Nennweite der medienführenden Teile. Wie erwähnt ist die Querschnittsform des Dichtringes an den Dichtungskanal der Verbindung angepaßt, beispielsweise ist sie in unverformtem Zustand rund oder oval.

Der Dichtring besteht normalerweise aus einem flexiblen, gummiartigen Material mit dem Medium in Bezug auf Temperatur- und chemischer Beständigkeit etc. angemessenen Eigenschaften. Er kann aber auch aus Hartmetall oder einer Eisen-Titan-Legierung, beispielsweise aus Ferro-Titanit, bestehen. Dabei kann der Dichtungsring im Vergleich zu den beiden medienführenden Teilen das härtere Bauteil sein. Demzufolge müssen die Teile unter der Spannkraft verformbar sein, um eine Dichtwirkung zu erreichen.

Bei einer Weiterbildung der Erfindung ist die Abdichtung der medienführenden Teile eine Verschraubung, die insbesondere eine das Fressen beim Verschrauben verhindernde Beschichtung aufweist. Dazu ist beispielsweise eine Hartmetallbeschichtung, vorzugsweise eine Titan-Nitrid-Beschichtung geeignet.

Die Abdichtung kann auch eine Flanschverbindung sein, bei der der Kontaktdruck durch Verschrauben der Flansche erzeugt wird. Als Anschluß-Verbindungen ausgebildete Abdichtungen werden vorzugsweise in eine Rohrleitung bzw. an einen Behälter angeschweißt. Dazu eignet sich besonders das Orbitalschweißen.

Die Teile können aus harten Materialien, z.B. rostfreiem Stahl, bestehen. Es sind aber auch andere Materialien geeignet, aus denen auch die gesamten Teile hergestellt sein können, z.B. Kunststoff oder Keramik. Kunststoff-Abdichtungen können beispielsweise durch einen Spritzgießprozess hergestellt werden.

Die Vorteile der beschriebenen Erfindung bestehen darin, daß beim Zusammenfügen und Verspannen der medienführenden Teile sich die Dichtung derart verformt, daß keine Toträume oder Spalte entstehen, die potentielle Kontaminationsquellen sind. Dazu sind zusätzlich zur Dichtfuge am Dichtungskanal Bereiche vorgesehen, in den sich der Dichtring hineinverformt. Zwei dieser Bereiche sind Haupt-Ausdehnungsräume, die als eine Art Tasche am Grund der nutförmig ausgebildeten Dichtungskanalhälften ausgebildet sind und in die sich der Hauptteil des Dichtringes beim Verspannen der Teile hineinverformt. Der Neben-Ausdehnungsraum liegt der Dichtfuge gegenüber, also an einer dem Medienraum gegenüberliegenden Seite. Dadurch, daß der Dichtring unter der Spannkraft nicht nur radial nach innen, sondem axial nach beiden Seiten und radial nach außen ausweicht, wird sichergestellt, daß es an der Dichtungsfuge zu keinem über die Wandungen der Teile hervorstehenden Wulst kommt, an dem sich Keime oder Bakterien anlagern können. Dadurch wird die erfindungsgemäße Verbindung insbesondere auch den hohen Anforderungen bei sterilen oder keimarmen Prozessen gerecht.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Zwei bevorzugte Ausführungsformen sind anhand der Zeichnungen dargestellt. Hierbei zeigen:
- Fig. 1: eine teilweise geschnittene Ansicht durch die Abdichtung;
- Fig. 2: in vergrößertem Maßstab die Einzelheit Z der Fig. 1;
- Fig. 3: eine geschnittene Draufsicht auf eine Abdichtung zwischen einem Schauglas und einem Behälter, die nicht im Rahmen der Erfindung liegt;
- Fig. 4: in vergrößertem Maßstab einen Teil der Fig. 3 und
- Fig. 5: in vergrößertem Maßstab die Einzelheit Z der Fig. 1, mit einer Darstellung der Verteilung des Anpreßdrucks.

### DETAILLIERTE BESCHREIBUNG DER AUSFÜHRUNGSBEISPIELE

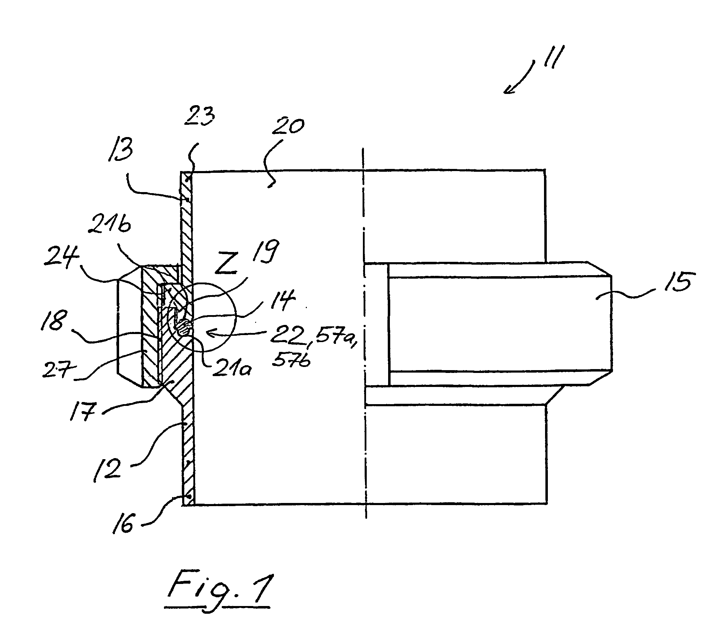

Die Fig. 1 zeigt eine Verschraubung 11, wie sie insbesondere zur Verbindung zweier Rohre eingesetzt wird. Die Verschraubung 11 besteht aus vier Teilen, einem Gewindestutzen 12, einem Bundstutzen 13, einem Dichtring 14 und einer Überwurfmutter 15. Gewindestutzen 12 und Bundstutzen 13 sind vorzugsweise aus rostfreiem Stahl, beispielsweise aus einem Chrom-Nickel-Molybdänstahl hergestellt. Die gängigen Nennweiten solcher Verschraubungen 11 liegen im Bereich von 6 mm bis 100 mm (DN 6 bis DN 100). Die Verschraubungen sind für Betriebsdrücke von bis zu 60 bar ausgelegt. Der Dichtring 14 ist beispielsweise ein O-Ring, der lebensmittelgeeignet ist. Er ist vorzugsweise aus Kautschuk, beispielsweise aus Acryl-Nitril-Butadien-Kautschuk. Die Oberflächen der Verschraubung 11 sind für die Cleaning-In-Part (CIP)-Reinigung und die Sterilization-In-Part (SIP)-Sterilisierung geeignet.

Der Gewindestutzen 12 besteht aus einem Rohrabschnitt 16, an den sich ein im Durchmesser größerer Gewindeabschnitt 17 anschließt. Der Rohrabschnitt 16 wird an ein Rohr (nicht dargestellt) angeschweißt. Als Schweißverfahren hat sich dabei insbesondere das Orbitalschweißen als für sterile oder keimarme Prozesse geeignet erwiesen. Der Übergang zwischen Gewindeabschnitt 17 und Rohrabschnitt 16 ist konisch ausgebildet. Der Gewindeabschnitt 17 weist ein Außengewinde 18 auf, das vom Übergang zwischen Rohrabschnitt 16 und Gewindeabschnitt 17 bis zum Ende des Gewindeabschnitts 17 reicht. Am gewindeabschnittseitigen Ende des Gewindestutzens 17 ist ein radial umlaufender Einschnitt 19 ausgebildet, der zum Medienraum 20 hin weist. Am Fuß des Einschnittes 19 ist eine Dichtfläche 21a in Form einer Nut mit halbkreisförmigem Querschnitt ausgebildet, die beim Zusammenfügen von Gewindestutzen 12 und Bundstutzen 13 einen Teil des Dichtungskanales 22, der nachfolgend noch beschrieben wird, bildet.

Der Bundstutzen 13 weist einen Rohrabschnitt 23 und einen Flanschabschnitt 24 auf. Der Rohrabschnitt 23 des Bundstutzens 13 kann ebenfalls in eine Rohrleitung (nicht dargestellt) eingeschweißt werden. Der Flanschabschnitt 24 ist eine stufenförmige Erweiterung an der Außenfläche des Rohrabschnittes 23. Der Flanschabschnitt 24 weist zum flanschseitigen Ende des Bundstutzens 13 einen Stufe 25 auf, die in einen radial umlaufenden Steg 26 übergeht. Am Kopf des Steges 26 ist eine Dichtfläche 21b in Form einer Nut mit halbkreisförmigem Querschnitt ausgebildet, die beim Zusammenfügen von Gewindestutzen und Bundstutzen 12, 13 einen Teil des Dichtungskanals 22 bildet.

Die Überwurfmutter 15 dient zur Verspannung von Gewinde- und Bundstutzen 12, 13. Sie weist einen Gewindeabschnitt 27 mit einem Innengewinde 28, sowie einen Anschlagbund 29 zur Fixierung der Überwurfmutter 15 an dem Bundstutzen 13 auf. Das Innengewinde 28 hat eine Hartmetallbeschichtung, um das Fressen beim Verschrauben der Überwurfmutter 15 mit dem Gewindestutzen 12 zu verhindern.

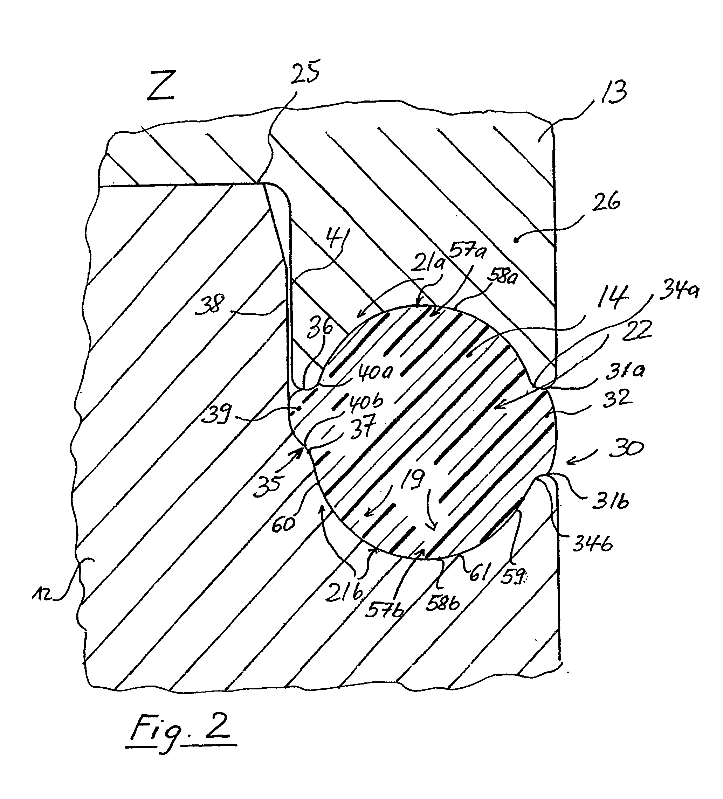

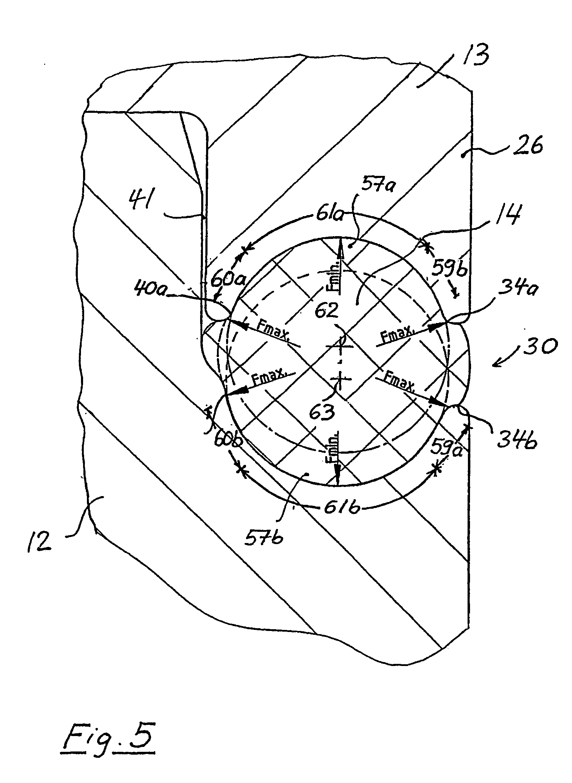

In Fig. 2 ist in vergrößertem Maßstab der vom Gewindestutzen 12 und vom Bundstutzen 13 gebildete Dichtungskanal 22 dargestellt. Sind der Gewindestutzen 12 und der Bundstutzen 13 zusammengefügt, wird der Dichtungskanal 22 im wesentlichen von den beiden Dichtflächen 21a, 21b am Gewindestutzen 12 bzw. am Bundstutzen 13 gebildet. Der Dichtungskanal 22 mündet zum Medienraum 20 hin in eine Dichtfuge 30. Er hat eine vom unverformt halbkreisförmigen Querschnitt des Dichtrings 14 abweichende ovale Querschnittsform. Wie in Fig. 5 dargestellt, wird der Dichtungskanal von zwei Kanalhälften gebildet, die jeweils aus einem Halbkreisbogen 61a, 61b und daran tangential anschließenden schwächer gekrümmten Abschnitten 59a, 59b, 60a, 60b bestehen. Die Mittelpunkte 62, 63 der Halbkreisbögen 61a, 61b liegen dabei axial versetzt zueinander. Diese von der Halbkreisform abweichende Querschnittsform ermöglicht die Ausbildung von zwei taschenartigen Haupt-Ausdehnungsräumen 57a, 57b am Grund der jeweiligen Dichtungskanalhälfte. Die Dichtfuge 30 ist ein radial umlaufender Spalt, der von einer Begrenzungskante 31a des Bundstutzens 13 und von einer Begrenzungskante 31b des Gewindestutzens 12 gebildet wird, die nach dem Zusammenführen von Bund und Gewindestutzen 12, 13 einen Abstand voneinander einhalten. Die Begrenzungskanten 31a, 31b haben einen gleichmäßigen Radius, der im Bereich von einem Zwanzigstel bis einem Drittel, vorzugsweise einem Zehntel bis einem Fünftel der Querschnittsabmessung des Dichtringes 14 liegt. Der Dichtring 14 hat im unverformten Zustand einen kreisrunden Querschnitt. Er hat im Vergleich zur Nennweite der Verschraubung 11 eine Querschnittsabmessung, die im Bereich von einem Hundertfünfzigstel bis einem Zehntel, insbesondere einem Hundertstel bis ein Fürizigstel der Nennweite der Verschraubung 11 liegt. Beispielsweise wären dies bei einer Nennweite der Verschraubung von 100 mm ein Millimeter. Im verformten Zustand, also unter der Spannkraft beim Verschrauben ist am Dichtring 14 ein Wulst 32 ausgebildet, der in die Dichtfuge 30 hineinreicht und mit den Innenwandungen von Gewinde- und Bundstutzen 12, 13 fluchtet. Die Begrenzungskanten 31a und 31b des Gewinde- bzw. Bundstutzens 12, 13 bilden am Übergang zwischen diesem Wulst 32 und dem restlichen Dichtring 14 zwei sich gegenüberliegende innere Haupt-Dichtflächen 34a, 34b, die die eigentliche Dichtwirkung bewirken. Der Dichtfuge 30 gegenüberliegend mündet der Dichtungskanal 22 in den Neben-Ausdehnungsraum 35. Der Neben-Ausdehnungsraum 35 wird durch eine dem Medienraum 20 abgewandte Begrenzungskante 36 am Steg 26 des Bundstutzens 13 und einem S-förmigen Übergang 37 zwischen der Nut 21b und der radialen Seitenfläche 38 des Einschnittes 19 am Gewindestutzen 12 axial begrenzt.

Im verformten Zustand nimmt der Neben-Ausdehnungsraum 35 einen weiteren Wulst 39 des Dichtringes 14 auf. Die Begrenzungskante 36, der Dichtung 14 und der S-förmige Übergang 37 bilden am Übergang dieses Wulstes 39 zum restlichen Dichtring 14 zwei sich gegenüberliegende äußere Haupt-Dichtflächen 40a, 40b, die die eigentliche Dichtwirkung von außen nach innen bewirken. Der Neben-Ausdehnungsraum 35 geht in eine axial verlaufende Trennfuge 41 über, die beim Zusammenfügen von Gewinde und Bundstutzen 12, 13 als Spalt zwischen einer Seitenfläche des Steges 26 und der radialen Seitenfläche 38 des Einschnittes 19 gebildet wird. Die Seitenfläche 38 am Gewindestutzen 12 ist abgeschrägt, um ein optimales Fixieren von Gewinde und Bundstutzen 12, 13 sicherzustellen.

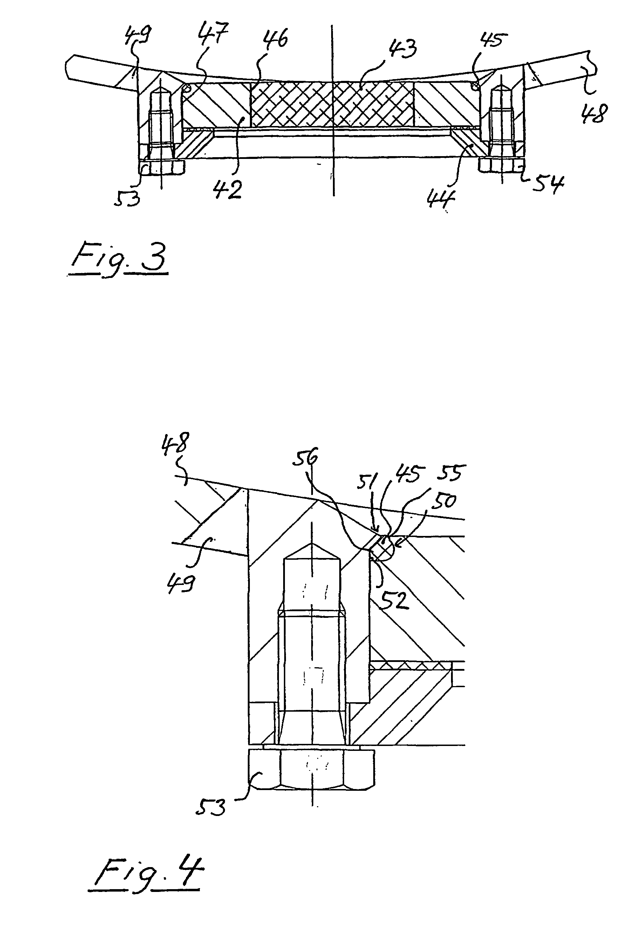

In den Figuren 3 und 4 ist eine Verbindung zwischen einem Schauglas 43 und einem Behälterteil als weiteres Ausführungsbeispiel dargestellt. Die Verbindung besteht aus einem Bundstutzen 42 mit einem Schauglas 43, einem Haltering 44 und einem O-Ring 45. Das Schauglas 43 kann als Durchgangsschauglas oder als Bullaugenschauglas verwendet werden. Als Werkstoff wird vorzugsweise Borosilikatglas eingesetzt. Der Bundstutzen 42 ist aus Stahl, beispielsweise aus einem Chrom-Nickel-Molybdän-Stahl.

Der Bundstutzen 42 besitzt mittig eine Durchgangsöffnung 46, in die das Schauglas 43 eingelassen ist. Der Bundstutzen 42 ist an einer Aufnahmeöffnung 47 eines Behälters 48 festgelegt und wird durch den Haltering 44 fixiert. Die Aufnahmeöffnung 47 ist eine Art vom Behälter 48 vorstehendes Fenster, in das der Bundstutzen 40 mit dem Schauglas 43 eingesetzt wird. Zur Befestigung des Bundstutzens 42 dienen Befestigungsschrauben 53, 54, deren Schraubenkopf auf den Haltering 44 wirkt und den Haltering 44 samt Bundstutzen 42 festlegt. Das Aufnahmefenster 47 des Behälters 48 ist zum restlichen Behälter 48 hin durch eine keilförmige Spaltdichtung 49 abgedichtet. Zwischen der Innenwandung des Aufnahmefensters 47 und der Außenwandung des Bundstutzens 42 ist ein Dichtungskanal 50 ausgebildet (Fig. 4). Der Dichtungskanal 50 wird durch einen radial umlaufenden Einstich am Bundstutzen 42 und einer geraden und einer daran anschließenden schrägen Fläche am Ende des Aufnahmefensters 47 gebildet. An den Dichtungskanal 50 schließen sich zur Medienseite hin eine Dichtfuge 51 und dieser schräg gegenüber ein Aufnahmeraum 52 an, in die sich der im Dichtungskanal 50 befindliche O-Ring 45 unter der Spannkraft der Befestigungsschraube 53 hinein verformt.

### FUNKTIONSBESCHREIBUNG

Zur Herstellung der Abdichtung werden die Ringnuten, d.h. die Hälften des Dichtungskanals 22, durch Feindrehen, insbesondere mit einem Profilstahl, eingearbeitet. Kunststoff-Abdichtungen können durch Spritzgießen hergestellt werden. Dabei wird besonders auf den auf dem Scheitel der Begrenzungskanten 31a, 31b liegenden Radius geachtet, der sich nicht aus zwei seitlichen Radien zusammenfügt, sondem mit einem Profilstahl vom Scheitel her gebildet wird, also in Fig. 2 jeweils von oben bzw. unten her. Dadurch ist sichergestellt, daß der vom Medienraum her zuerst mit dem Dichtring 14 in Kontakt kommende Teil, also der Scheitel der Begrenzungskanten 31a, 31b abgerundet und nicht spitz ist. Wenn die Begrenzungskanten 31a, 31b infolge der Toleranzen in der Fertigung sehr schmal werden, wird durch die Radienbildung kein "Spitzbogen", sondern ein ggf. flacher Rundbogen erzeugt. Die Dichtung-kann also dort auch bei der Verformung nicht eingeschnitten werden, was nicht zu reinigende Bakteriennester bilden könnte.

Bei der in den Figuren 1 und 2 dargestellten Verschraubung 11 wird zur Montage zunächst der Dichtring 14 in die nutförmige Dichtfläche 21 b mit halbkreisförmigem Querschnitt am Fuße des Einschnitts 19 am Gewindestutzen 12 eingelegt. Dabei kommt der Dichtring 14 lediglich mit den Haupt-Dichtflächen 34a, 34b, 40a, 40b in Kontakt, während zwischen den Neben-Dichtflächen 58a, 58b und dem Dichtring 14 zunächst jeweils ein Spalt besteht, der den Haupt-Ausdehnungsräumen 57a, 57b entspricht. Danach wird der Bundstutzen 13 auf den Gewindestutzen 12 gesteckt, bis es zu einem metallischen Anschlag zwischen dem Flanschabschnitt 24 des Bundstutzens 13 und dem Gewindeabschnitt 17 des Gewindestutzens 12 kommt. Dabei bildet sich zwischen der Seitenfläche des Einschnitts 19 des Gewindestutzens 12 und der Seitenfläche des Steges 26 am Bundstutzen 13 eine axial verlaufende Trennfuge 41 aus. Zur Verspannung von Gewinde und Bundstutzen 12, 13 wird nun die Überwurfmutter 15 auf das Außengewinde 18 des Gewindestutzens 12 geschraubt, bis sich ein metallischer Anschlag zwischen dem Anschlag der Überwurfmutter 15 und dem Flansch am Bundstutzen 13 bildet. Dabei wird der Dichtring 14 derart verformt, daß sich Teile des Dichtrings in die Haupt-Ausdehnungsräume 57a, 57b hineinverformen und sich ein Wulst 32 in die Dichtfuge 30 am Medienraum 20 hineinverformt und ein anderer Wulst 39 in den Neben-Ausdehnungsraum 35, der der Dichtfuge 30 gegenüberliegt, hineinverformt. Die Anpreßkraft verteilt sich derart, daß an den Haupt-Dichtflächen 34a, 34b, 40a, 40b die maximale Anpreßkraft (Fₘₐₓ; Fig. 5) herrscht. Dort drücken sich die Begrenzungskanten 31a, 31b, 36, 37 des Gewinde- und Bundstutzens 12, 13 in den Dichtring 14 ein. An den Neben-Dichtflächen 58a, 58b am Grund der Haupt-Ausdehnungsräume 57a, 57b hingegen wirkt eine minimale Anpreßkraft (Fₘᵢₙ; Fig. 5).

Bei der in den Figuren 3 und 4 beschriebenen Abdichtung zwischen einem Schauglas 43 und einem Behälter 48 wird zunächst der O-Ring 45 in den Bundstutzen 42 eingelegt. Sodann wird der Bundstutzen 42 in das Aufnahmefenster 47 des Behälters 48 eingeführt und wird an der schrägen Fläche am Ende des Aufnahmefensters 47 in Einschubrichtung axial fixiert. Danach wird der Haltering 44 in das Aufnahmefenster 47 auf den Bundstutzen geschoben und dieser mit Hilfe der Befestigungsschrauben 53, 54 am Aufnahmefenster 47 fixiert. Somit ist der Bundstutzen 47 auch entgegen der Einschubrichtung gegen Herausfallen axial gesichert. Unter der Spannkraft der Schraube 53, 54 verformt sich der O-Ring 45 im Dichtungskanal 50 derart, daß ein Wulst 55 in die Dichtfuge 51 am Medienraum 20 und ein anderer Wulst 56 in den Ausdehnungsraum 52 der der Dichtfuge 51 schräg gegenüber liegt, hineinverformt wird.

## Patentansprüche

1. Lösbare Abdichtung zwischen medienführenden Teilen, insbesondere für Aspeatikanwendungen, mit einem an einem Dichtsitz der Teile festlegbaren Rundschnur-Dichtring (14) zur Abdichtung der Teile, wobei der Dichtsitz von einem den Dichtring (14) weitgehend umschließenden Dichtungskanal (22) gebildet ist, der sich aus Dichtflächen (21a, 21b) beider Teile zusammensetzt, wobei zwischen den Teilen und zwischen den Dichtflächen (21a, 21b) eine zum Medienraum (20) hin weisende Dichtfuge (30) gebildet ist, in die sich der Dichtring (14) hineinverformt, wenn die Teile axial auf Anschlag gegeneinander verspannt werden, wobei sich an einer von der Dichtfuge (30) abgewandten Seite an den Dichtungsgkanal (22) eine Trennfuge (41) anschließt, wobei der Dichtungskanal (22) wenigstens einen von der unverformten Querschnittsform des Dichtringes (14) abweichenden Ausdehnungsraum (35, 57a, 57b) aufweist, in den sich der Dichtring (14) unter der Spannkraft zur Verbindung der Teile hineinverformt und der zumindest einen Haupt-Ausdehnungsraum (57a, 57b) aufweist, **dadurch gekennzeichnet, daß** der Haupt-Ausdehnungsraum (57a, 57b) in beiden Teilen durch ein gegenüber einer Halbkreisform vertieftes Profil der den Dichtungskanal (22) bildenden Kanalhälfte gebildet ist.

2. Abdichtung nach Anspruch 1, **dadurch gekennzeichnet, daß** sich die Dichtflächen (21 a, 21 b) aus Haupt-Dichtflächen (34a, 34b, 40a, 40b), die an die Dichtfuge (30) bzw. Trennfuge (41) angrenzen und Neben-Dichtflächen (58a, 58b) zusammensetzen, die im Bereich des wenigstens einen Ausdehnungsraums (35, 57a, 57b) liegen, wobei an den vorzugsweise schmalen Haupt-Dichtflächen (34a, 34b, 40a, 40b) ein erhöhter DichtungsAnpreßdruck herrscht.

3. Abdichtung nach Anspruch 1 oder 2, **dadurch gekennzeichnet, daß** der Ausdehnungsraum (35, 57a, 57b) derart ausgebildet ist, daß sich der Dichtring (14) im wesentlichen symmetrisch zu einer axialen und/oder radialen Mittelachse seines Querschnitts verformt.

4. Abdichtung nach einem der vorhergehenden Ansprüche, **dadurch gekennzeichnet, daß** das sich aus den zwei Kanalhälften zusammensetzende Profil durch zwei mit ihren Mittelpunkten (62, 63) in Achsrichtung auseinander versetzten Kreisbögen besteht.

5. Abdichtung nach einem der vorhergehenden Ansprüche, **dadurch gekennzeichnet, daß** das Querschnittsprofil der Kanalhälfte aus einem Halbkreisbogen (61a, 61b) und daran tangential anschließenden geraden oder schwächer gekrümmten Abschnitten (59a, 59b, 60a, 60b) besteht, an deren Enden sich die Haupt-Dichtflächen (34a, 34b, 40a, 40b) anschließen, die vorzugsweise im Bereich von in den Dichtringquerschnitt eingreifenden Abschnitten der Teile ausgebildet sind.

6. Abdichtung nach einem der vorhergehenden Ansprüchen, **dadurch gekennzeichnet, daß** ein Neben-Ausdehnungsraum (35) am Übergang zwischen Dichtungskanal (22) und Trennfuge (41) vorgesehen ist und eine über den Ringkanal (22) prägnant hervorragenden im Querschnitt wulstförmige Vertiefung mit gerundeten Kanten bildet.

7. Abdichtung nach Anspruch 6, **dadurch gekennzeichnet, daß** die Vertiefung mit S-förmigem Übergang (37) in den Dichtungskanal (22) übergeht

8. Abdichtung nach einem der Ansprüche 6 oder 7, **dadurch gekennzeichnet, daß** die Trennfuge (41) in axialem Verlauf an den Neben-Ausdehnungsraum (35) anschließt und vorzugsweise so eng, insbesondere nicht weiter als ein Hundertstel bis ein Zehntel, insbesondere ein Achzigstel bis ein Fünfzigstel der Querschnittsabmessung des Dichtrings (14), ist, daß die Verformung des Dichtrings (14) vor ihr endet.

9. Abdichtung nach einem der vorhergehenden Ansprüche, **dadurch gekennzeichnet, daß** der Dichtungskanal (22) und sein Ausdehnungsraum (35, 57a, 57b) in Abhängigkeit von den Abmessungen des Dichtringes (14) so bemessen sind, daß die Oberfläche des sich in die Dichtfuge (30) verformenden Teils des Dichtringes (14) im wesentlichen mit den medienführenden Wandungen der Teile fluchtet

10. Abdichtung nach einem der vorhergehenden Ansprüche, **dadurch gekennzeichnet, daß** die an die Dichtfläche (21a, 21b) anschließenden Begrenzungskanten (31a, 31b, 36) der Dichtfuge (30) mit einem gleichmäßigen, vorgegebenen und von der toleranzveränderlichen Dicke der Kante unabhängigen Radius versehen sind.

11. Abdichtung nach Anspruch 10, **dadurch gekennzeichnet, daß** die Größe des Radius ein Zwanzigstel bis ein Drittel, vorzugsweise ein Zehntel bis ein Fünftel der Querschnittsabmessung des Dichtringes (14) beträgt.

12. Abdichtung nach Anspruch 10, **dadurch gekennzeichnet, daß** die Querschnittsabmessung des Dichtringes (14) gering im Vergleich zur Nennweite der medienführenden Teile ist, vorzugsweise ein Einhundertfünfzigstel bis ein Zehntel, insbesondere ein Einhundertstel bis ein Fünfzigstel der Nennweite der medienführenden Teile beträgt

13. Abdichtung nach einem der vorhergehenden Ansprüche, **dadurch gekennzeichnet, daß** der Dichtring (14) aus Hartmetall, insbesondere FerroTitanit ist und die Teile unter der Spannkraft verformbar sind.

14. Abdichtung nach einem der vorhergehenden Ansprüche, **dadurch gekennzeichnet, daß** zur Verbindung der medienführenden Teile eine (18)Verschraubung (11) vorgesehen ist, die insbesondere eine das Fressen beim Verschrauben (11) verhindernde Beschichtung aufweist, vorzugsweise eine Titan-Nitrid-Beschichtung ist.

15. Abdichtung nach einem der vorhergehenden Ansprüche, **dadurch gekennzeichnet, daß** die Abdichtung eine Anschluß-Verbindung zwischen zwei medienführenden Teilen, insbesondere zwischen zwei Rohren ist.

16. Abdichtung nach einem der vorhergehenden Ansprüche, **dadurch gekennzeichnet, daß** die Teile aus einem harten Werkstoff, insbesondere aus Metall, wie rostfreiem Stahl, oder Kunststoff sind.

17. Abdichtung nach einem der vorhergehenden Ansprüche, **dadurch gekennzeichnet, dass** das Zusammenfügen der Teile (12, 13) unter einer durch metallischen Anschlag der beiden Teile (12, 13) definierten Vorspannung erfolgt.

## Claims

1. Detachable sealing system between media-carrying parts, particularly for aseptic applications, with a sealing ring (14), preferably a toroidal sealing ring, fixable to the sealing seat of the parts for the purpose of sealing the same, the sealing seat being formed by a sealing channel (22) substantially surrounding the sealing ring (14) and which is formed from the sealing surfaces (21a, 21b) of both parts and between the parts and between the sealing surfaces (21a, 21b) is formed a sealing gap (30) directed towards the media area (20) into which the sealing ring (14) is deformed if the parts are axially braced in stop manner against one another, whilst on a side remote from the sealing gap (30) there is a separating gap (41) provided, the sealing channel (22) having at least one expansion chamber (35, 57a, 57b) diverging from the undeformed cross-sectional shape of the sealing ring (14) into which the sealing ring (14) is deformed under the bracing force for connecting the parts, and having at least one main expansion chamber (57a, 57b), **characterized in that** the main expansion chamber (57a, 57b) is formed in both parts by a recessed profile compared with a semicircular shape of the channel half forming the sealing channel (22).

2. Sealing system according to claim 1, **characterized in that** the sealing surfaces (21a, 21b) comprise main sealing surfaces (34a, 34b, 40a, 40b), which are adjacent to the sealing gap (30) or separating gap (41) and secondary sealing surfaces (58a, 58b) which are located in the vicinity of at least one expansion chamber (35, 57a, 57b), an increased sealing contact pressure prevailing on the preferably narrow main sealing surfaces (34a, 34b, 40a, 40b).

3. Sealing system according to claim 1 or 2, **characterized in that** the expansion chamber (35, 57a, 57b) is constructed in such a way that the sealing ring (14) is deformed substantially symmetrically to an axial and/or radial central axis of its cross-section.

4. Sealing system according to one of the preceding claims, **characterized in that** the profile composed of the two channel halves consists of two arcs of a circle with their centres (62, 63) mutually offset in axial direction.

5. Sealing system according to one of the preceding claims, **characterized in that** the cross-sectional profile of the channel halves comprises a semicircular arc (61, 61b) and a straight or slightly curved portions (59a, 59b, 60a, 60b) connecting tangentially thereto and to whose ends are connected the main sealing surfaces (34a, 34b, 40a, 40b), which are preferably formed in the vicinity of the portions of the parts engaging in the sealing ring cross-section.

6. Sealing system according to one of the preceding claims, **characterized in that** a secondary expansion chamber (35) is provided at the transition between the sealing channel (22) and the separating gap (41) and forms a cross-sectionally bead-shaped depression with rounded edges projecting over the annular channel (22).

7. Sealing system according to claim 6, **characterized in that** the depression passes with a S-shaped transition (37) into the sealing channel (22).

8. Sealing system according to one of the claims 6 to 7, **characterized in that** the sealing gap (41) is axially connected to the secondary expansion chamber (35) and is preferably so narrow, particularly no wider than 1/100 to 1/10, particularly 1/80 to 1/50 of the cross-sectional dimension of the sealing ring (14), that the deformation of the sealing ring (14) ends before it.

9. Sealing system according to one of the preceding claims, **characterized in that** the sealing channel (22) and its expansion chamber (35, 57a, 57b) are so dimensioned as a function of the dimensions of the sealing ring (14) that the surface of the part of the sealing ring (14) deforming into the sealing gap (30) is substantially aligned with the media-carrying walls of the parts.

10. Sealing system according to the one of the preceding claims, **characterized in that** the boundary edges (31a, 31b, 36) of the sealing gap (30) connected to the sealing surface (21a, 21b) are provided with a uniform and predetermined radius independent of the tolerance-variable thickness of the edge.

11. Sealing system according to claim 10, **characterized in that** the size of the radius is 1/20 to 1/3, preferably 1 /10 to 1/5 of the cross-sectional dimension of the sealing ring (14).

12. Sealing system according to claim 10, **characterized in that** the cross-sectional dimension of the sealing ring (14) is small compared with the nominal width of the media-carrying parts and is preferably 1/150 to 1/10, particularly 1/100 to 1/50 of the nominal width of the media-carrying parts.

13. Sealing system according to one of the preceding claims, **characterized in that** the sealing ring (14) is made from hard metal, particularly ferrotitanate and the parts are deformable under the bracing force.

14. Sealing system according to one of the preceding claims, **characterized in that** for the connection of the media-carrying parts a screw coupling (11) is provided and has in particular a coating preventing corrosion during the screwing action (11) and which is preferably a titanium-nitride coating.

15. Sealing system according to one of the preceding claims, **characterized in that** the sealing system is a joint connection between two media-carrying parts, particularly between two pipes.

16. Sealing system according to one of the preceding claims, **characterized in that** the parts are made from a hard material, particularly metal, such as stainless steel or plastic.

17. Sealing system according to one of the preceding claims, **characterized in that** the joining of parts (12, 13) is performed under a pretension defined by metallic contact of the two parts (12, 13).

## Revendications

1. Dispositif d'étanchement entre des éléments conduisant des substances, notamment pour des applications nécessitant l'asepsie, avec un joint torique (14) pour l'étanchement des éléments, qui peut être fixé auprès d'un siège d'étanchéité des éléments, le siège d'étanchéité étant constitué par un conduit d'étanchéité (22) entourant en grande partie la bague d'étanchéité (14), le conduit d'étanchéité se composant de surfaces d'étanchéité (21a, 21b) des deux éléments, un joint d'étanchéité (30) orienté vers l'espace à substance (20) et étant constitué entre les éléments et entre les surfaces d'étanchéité (21a, 21b), la bague d'étanchéité (14) étant déformée pour s'introduire dans le joint d'étanchéité quand les éléments sont serrés les uns contre les autres en direction axiale, une fente de séparation (41) faisant suite du côté opposé au joint d'étanchéité (30) au conduit d'étanchéité (22), le conduit d'étanchéité (22) présentant au moins un récipient d'expansion (35, 57a, 57b) différant de la forme de la section transversale non déformée de la bague d'étanchéité (14), la bague d'étanchéité (14) se déformant pour s'introduire dans ce récipient sous l'effet de la force de serrage nécessaire à joindre les éléments, le récipient d'expansion présentant au moins un récipient d'expansion principale (57a, 57b), **caractérisé en ce que** le récipient d'expansion principal (57a, 57b) dans les deux éléments est formé par un profil plus profond par rapport à la forme demi-circulaire, de la moitié du conduit qui forme le conduit d'étanchéité (22).

2. Dispositif d'étanchement d'après la revendication 1, **caractérisé en ce que** les surfaces d'étanchéité (21a, 21b) se composent de surfaces d'étanchéité principales (34a, 34b, 40a, 40b) limitrophes au joint d'étanchéité (30) ou encore à la fente de séparation (41) et de surfaces d'étanchéité secondaires (58a, 58b) situées dans le domaine du réservoir d'expansion (35, 57a, 57b) au moins unique, une pression d'appui d'étanchement surélevée régnant auprès des surfaces d'étanchéité principales (34a, 34b, 40a, 40b) préférablement étroites.

3. Dispositif d'étanchement d'après la revendication 1 ou 2, **caractérisé en ce que** le réservoir d'expansion (35, 57a, 57b) est réalisé de manière que la bague d'étanchéité (14) se déforme de façon essentiellement symétrique par rapport à une ligne médiane axiale et/ou radiale de sa section transversale.

4. Dispositif d'étanchement d'après une des revendications précédentes, **caractérisé en ce que** le profil composé des deux moitiés de conduit se compose de deux arcs de cercle, dont les centres (62, 63) sont écartés l'un de l'autre en direction de l'axe.

5. Dispositif d'étanchement d'après une des revendications précédentes, **caractérisé en ce que** le profil de coupe transversale de la moitié de conduit est constitué d'un arc en demi-cercle (61a, 61b) et de sections (59a, 59b, 60a, 60b) rectilignes ou courbées plus légèrement, se succédant en direction tangentielle, aux extrémités desquelles font suite les surfaces d'étanchéité principales (34a, 34b, 40a, 40b), qui sont réalisées de préférence dans le domaine de sections d'éléments qui s'engagent dans la section transversale de la bague d'étanchéité.

6. Dispositif d'étanchement d'après une des revendications précédentes, **caractérisé en ce qu'**un récipient d'expansion secondaire (35) est prévu dans un endroit de transition entre le conduit d'étanchéité (22) et la fente de séparation (41) et qu'il forme un creux présentant des arêtes arrondies et saillant de manière significative au-delà du conduit annulaire (22) et en forme de renflement en section transversale.

7. Dispositif d'étanchement d'après la revendication 6, **caractérisé en ce que** le creux se transforme en conduit d'étanchéité (22) par une transition (37) en forme de S.

8. Dispositif d'étanchement d'après la revendication 6 ou 7, **caractérisé en ce que** la fente de séparation (41) fait suite en direction axiale au récipient d'expansion secondaire (35) et qu'elle est de préférence étroite, notamment pas plus ample qu'un centième jusqu'à un dixième, notamment un quatre-vingtième jusqu'à un cinquantième de l'étendue de la section transversale de la bague d'étanchéité (14), de manière que la déformation de la bague d'étanchéité (14) se termine avant celle-ci.

9. Dispositif d'étanchement d'après une des revendications précédentes, **caractérisé en ce que** le conduit d'étanchement (22) et son récipient d'expansion (35, 57a, 57b) sont dimensionnés par rapport aux dimensions de la bague d'étanchéité (14) de telle manière que la surface de la partie de la bague d'étanchéité (14), qui se déforme pour s'introduire dans le joint d'étanchéité (30), soit essentiellement alignée avec les parois conduisant la substance.

10. Dispositif d'étanchement d'après une des revendications précédentes, **caractérisé en ce que** les arêtes de délimitation (31a, 31b, 36) du joint d'étanchéité (30) qui font suite à la surface d'étanchéité (21a, 21b) sont dotées d'un rayon uniforme, prédéterminé et indépendant de l'épaisseur d'arête variable dans le domaine de la tolérance.

11. Dispositif d'étanchement d'après la revendication 10, **caractérisé en ce que** la dimension du rayon comporte un vingtième jusqu'à un tiers, de préférence un dixième jusqu'à un cinquième de la dimension de la section transversale de la bague d'étanchéité (14).

12. Dispositif d'étanchement d'après la revendication 10, **caractérisé en ce que** la dimension de la section transversale de la bague d'étanchéité (14) est petite par rapport à la section nominale de passage des éléments conduisant la substance, comportant de préférence un cent cinquantième jusqu'à un dixième, notamment un centième jusqu'à un cinquantième de la section nominale de passage des éléments conduisant la substance.

13. Dispositif d'étanchement d'après une des revendications précédentes, **caractérisé en ce que** la bague d'étanchéité (14) est composée de métal dur et notamment de ferro-titanite et que les éléments sont déformables sous l'effet de la force de serrage.

14. Dispositif d'étanchement d'après une des revendications précédentes, **caractérisé en ce que** pour le raccordement des éléments conduisant la substance on prévoit un raccord à vis (11) qui présente notamment une couche préférablement composée de nitrure de titane, qui empêche un grippage pendant le vissage (11).

15. Dispositif d'étanchement d'après une des revendications précédentes, **caractérisé en ce que** le dispositif d'étanchement est un raccord de connexion entre deux éléments conduisant la substance, notamment entre deux tuyaux.

16. Dispositif d'étanchement d'après une des revendications précédentes, **caractérisé en ce que** les éléments sont composés d'un matériau dur, notamment en métal, tel que acier inoxydable ou matière plastique.

17. Dispositif d'étanchement d'après une des revendications précédentes, **caractérisé en ce que** l'assemblage des éléments (12, 13) est effectué sous une précontrainte déterminée par l'impact métallique des deux éléments (12, 13).
